Europäisches Patentamt

European Patent Office

Office européen des brevets

(11) Publication number: **0 253 345 B1**

(12) **EUROPEAN PATENT SPECIFICATION**

(45) Date of publication of patent specification: **21.10.92**

(51) Int. Cl.5: **B60L 5/00**

(21) Application number: **87110080.6**

(22) Date of filing: **13.07.87**

(54) **Inductive power coupling with constant voltage output.**

(30) Priority: **18.07.86 US 887242**

(43) Date of publication of application:
**20.01.88 Bulletin 88/03**

(45) Publication of the grant of the patent:
**21.10.92 Bulletin 92/43**

(84) Designated Contracting States:
**AT BE CH DE ES FR GB GR IT LI LU NL SE**

(56) References cited:
**GB-A- 2 020 451**
**US-A- 3 914 562**

**IEEE VEHICULAR TECHNOLOGY CONFER-
ENCE March 1979, NEW YORK ,US pages 48 -
55; J.G. BOLGER: "Testing a Prototype Induc-
tive Power Coupling for an Electric Highway
System"**

(73) Proprietor: **INDUCTRAN CORPORATION**
**1326 Ninth Street**
**Berkeley California 94710(US)**

(72) Inventor: **Bolger, John G.**
**469 Tahos Road**
**Orinda California 94563(US)**
Inventor: **Ng, Lung Sheung Brian**
**860 Contra Costa Avenue**
**Berkeley California 94707(US)**

(74) Representative: **Meddle, Alan Leonard et al**
**FORRESTER & BOEHMERT Franz-
Joseph-Strasse 38**
**W-8000 München 40(DE)**

# Description

The present invention relates generally to apparatus for distributing electrical power, and more particularly to an inductive coupling for transferring power through an air gap.

Inductive power couplings are used to transfer electrical power to mobile equipment or to other devices under conditions that do not favor the use of trailing cables, sliding contacts, or the like. Since an inductive coupling transfers power by means of a magnetic field that extends through an air gap, safety, durability, and reliability are improved by the elimination of the problems associated with frayed cables and exposed contacts.

Electric power is used in mobile equipment to operate devices such as battery chargers, propulsion equipment, control systems and the like. These devices typically require electrical power from a constant-voltage source. Accordingly, there arose a need for an inductive coupling capable of providing power at a constant voltage.

Constant voltage transformers, also known as ferro-resonant transformers, are an effective source of constant voltage. A linear reactor is used in or with these transformers in conjunction with a capacitor and a saturable steel core in order that the effects of varying input voltage and output current are compensated for in maintaining a relatively constant output voltage. A precise air gap in a magnetic shunt between input and out windings is typically used in these transformers in order to achieve the linear reactance that is required.

An inductive power coupling consists of two inductors that are separated in operation by an imprecise and relatively large air gap. This construction precludes the use of a precisely controlled shunt reactance between the input and output windings in the manner of a ferro-resonant transformer. Accordingly, some other means of voltage regulation must be provided.

It has been proposed to regulate the voltage provided by an inductive coupling by means of switchable taps on the output winding of the coupling, but such an expedient provides only coarse regulation in a series of discrete steps. It has also been proposed to use solid-state switching regulators, but such regulators are costly and electronically complex.

In U.S. Patent 3,914,562 (Bolger), means are proposed for regulating the output voltage from an inductive coupling by varying the air gap between the input and output inductors. In U.S. Patent 4,331,225, also issued to Bolger, means are proposed for regulating the output voltage by switching various ones of a plurality of capacitors across the output winding. However, both of these devices require active controls that suffer from complexity and high cost, and hence, prior to the present invention, the need remained for an uncomplicated and economical means to regulate the output voltage from an inductive coupling.

It is, therefore, a general object of the present invention to provide an improved inductive power coupling for coupling power through an air gap that produces a constant voltage output despite fluctuations in the input power supply and the output load.

Another object of the invention is to provide an inductive power coupling that produces a constant voltage output and is constructed economically with a minimum of components.

Another object of the invention is to provide an inductive power coupling that is constructed so that the core of the pickup or output inductor will operate at its saturation level and, despite variations in supply power to the input inductor and the output load, mutual flux between the two inductors will remain essentially constant, thereby providing a constant output voltage from the pickup inductor.

Still another object of the invention is to provide an improved inductive power coupling that is particularly useful in combination with a battery charging circuit for an electrically powered vehicle.

Yet another object of the invention is to provide an inductive power coupling in combination with a battery charging circuit which automatically operates in a trickle charge mode at certain predetermined levels of battery condition.

In accordance with the present invention, an economical constant voltage inductive power coupling is provided that produces continuous rather than discrete voltage regulation with a minimum number of components. In general, the coupling comprises a first inductor, which may be designated a source or input inductor that is normally embedded in the ground or floor of a coupling installation and a second inductor which produces a constant output voltage. The first inductor is comprised of a steel core that may or may not be saturable in operation, with a coil wound around the core connected to an alternating current power source. The second or pickup inductor for the coupling is normally mounted on a vehicle which when positioned above the first inductor is separated from it by an air gap. This second inductor is comprised of a saturable steel core around which a coil is wound and having output leads connected to a relatively large capacitor in the output circuit. The alternating current output from the second inductor may be furnished through a direct current rectifier to a battery charging circuit or directly to drive motors for the vehicle.

The first and second inductors are coupled by mutual magnetic flux through the steel cores and across the air gap between them, inducing voltage in each turn of the output coil, which is proportional to the amount of magnetic flux. In accordance with the invention, the coupling is constructed to operate with a portion of the core of the second or output inductor in saturation. When increased magnetomotive force, i.e., ampere turns, is applied to the first or input inductor, it will cause only a small increase in mutual flux in the coupled cores, even though it causes a proportionally much larger increase in leakage flux, which does not affect the output voltage.

Thus, in accordance with the invention, an increase in input voltage will cause an increase in input current, but the increase will have little effect on output voltage of the second inductor because the increase in mutual flux is very small due to the saturated condition of this core. An increase in output current will cause a proportional increase in leakage flux and in the associated inductive component of output current. When combined with the effect of the current in the large capacitor in the output circuit, the current through which is not affected by the increase in output current, the output current more closely approaches a condition of resonance, i.e., unity power factor, and the output voltage will tend to be limited and maintained at a level determined by the amount of flux in the saturated core.

It will be appreciated from the foregoing that the present invention represents a significant advance in the field of inductive power coupling in that smoothly regulated, nearly constant voltage is provided from couplings that are constructed economically with a minimum of components.

Other objects, features and advantages of the present invention will become apparent from the following more detailed description thereof taken in conjunction with the accompanying drawing.

Fig. 1 is a view in elevation and in section of input and output inductors for a constant voltage inductive power coupling according to the present invention.

Fig. 1A is a view in elevation and in section showing a typical installation of the inductive power coupling of Fig. 1.

Fig. 1B is a view in elevation and in section showing the constant voltage output inductor according to the present invention in combination with a dynamic input inductor.

Fig. 2 is a fragmentary bottom plan view of the output inductor for the coupling of Fig. 1 and taken along line 2-2 thereof.

Fig. 3 is a fragmentary top plan view of the output inductor for the coupling of Fig. 1, taken along line 3-3 thereof.

Fig. 4A is a plan view of one core lamination for the output power inductor showing a top lamination.

Fig. 4B is a view in elevation of an output inductor core according to the invention, with a top trimming lamination separated therefrom.

Fig. 4C is a plan view of the trimming lamination shown in Fig. 4B.

Fig. 5 is a schematic diagram of a coupling according to the present invention.

Fig. 6 is a schematic diagram of an alternate embodiment of the saturable core and output inductor portion for the coupling of Fig. 5, showing an inductor having a plurality of taps.

Fig. 7 is a schematic diagram of another alternate embodiment of the saturable core and inductor portion of Fig 5, showing an inductor having a plurality of windings.

Fig. 8 is a schematic block diagram of a coupling for a vehicle having a battery and a charge controller according to the invention.

Fig. 9 is a schematic block diagram of a charge controller for use with the battery charger shown in Fig. 8.

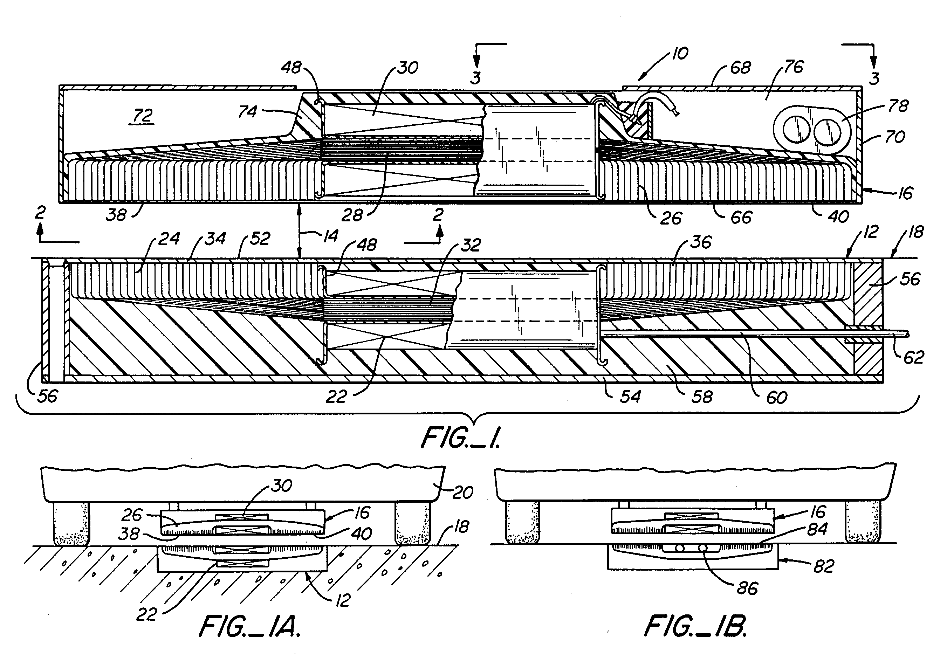

With reference to the drawing, Fig. 1 shows a constant voltage inductive power coupling 10 according to the present invention for magnetically transferring electrical power from a first inductor 12 connected to a power source through a gap 14 to a second inductor 16 connected to a load.

In a typical application of the coupling 10, as shown in Fig. 1A, the first inductor 12 may be installed at a fixed location within the ground 18 or a support structure flush with the ground, and the second inductor 16 may be installed in a vehicle 20 for the purpose of either charging a series of batteries or for directly energizing electrical drive motors or the like.

Together the first and second inductors comprise electromagnetic means for generating a shaped alternating magnetic field, each having a core to receive the field, and a coil electromagnetically coupled to the core.

Thus, the electromagnetic inductor 12 includes an input coil 22 to generate the field and an input core 24 to shape the field. The second inductor 16, located in a spaced-apart relationship to the first inductor to define the gap 14 therebetween, has a saturable core 26 that is magnetically coupled to the input core 24 to receive the shaped magnetic field, the core 26 being responsive to the field to enter a state of magnetic saturation. In an embodiment shown, the core 26 of the output inductor 16 has a saturable constricted portion 28 that is responsive to the field to enter a state of magnetic saturation with a lesser total magnetic flux than would be required to saturate the remaining portions of the core 26.

A coil 30 is electromagnetically coupled to the core 26 of the second inductor whereby the alternating magnetic field induces voltage in the coil 30 at an output voltage determined by the total magnetic flux in the core 26. The input inductor 12 is responsive to any change in input voltage to electromagnetically counteract an associated change in the magnetic flux in the opposing cores 24 and 26 so as to maintain the core 26 in a state of saturation, thereby tending to keep the output voltage constant.

The input core 24, which is usually embedded in the ground, as shown in Fig. 1, is generally U-shaped in cross section, with a center section 32 having first and second extremities 34 and 36 at opposite ends that serve as poles in the magnetic circuit. These poles extend upward to the surface plane of the ground 18. The input coil 22 is wound around the center portion 32 of the core 22, which is constricted in width to accommodate the input coil and to provide a saturable portion of the input core 24, when desired.

The output core 26 is also generally U-shaped and has first and second pole extremities 38 and 40 corresponding with the pole extremities 34 and 36, respectively, of the input core 24. In a typical installation, (as shown in Fig. 1A), the core 26 is mounted on the underside of a vehicle 20 with its pole extremities 38 and 40 extending downward towards the ground. The core 26 is spaced far enough above the ground to provide adequate obstacle clearance as the vehicle moves about but with its poles close enough to receive the magnetic field from the input core 24 when the vehicle is maneuvered into a position above it.

The coil 30 is preferably wound around the constricted center section 28 of the core 26, although it could be wound around another portion of the core 26, if desired. The constriction of the core is advantageous in that the inductor may be enclosed in a simple rectangular package of minimum size. It is also advantageous in reducing the dimensions of the coil 30, thereby saving weight and resistance in the coil.

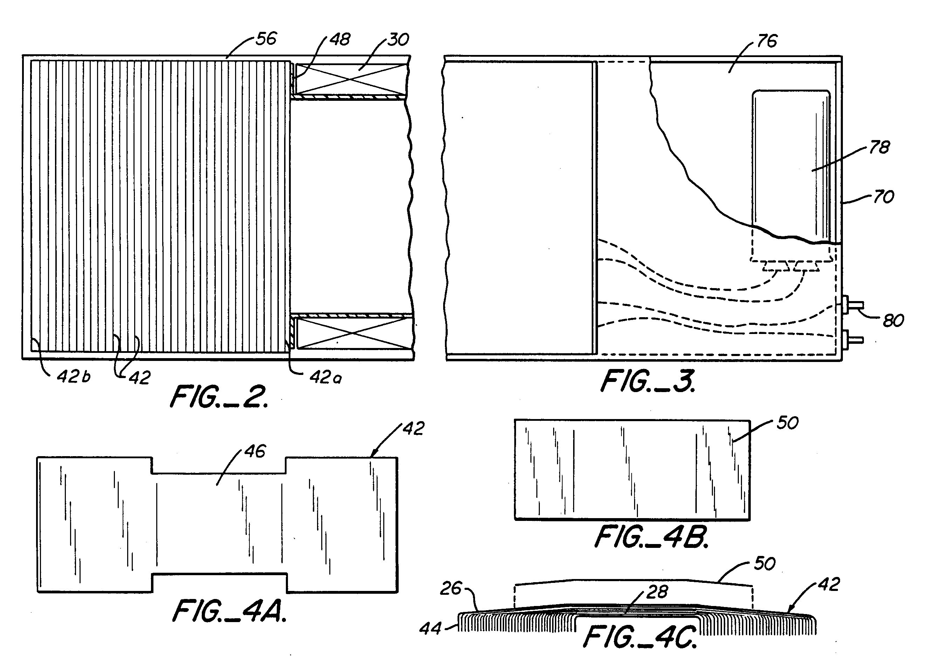

In the embodiment shown, both cores 24 and 26 comprise a plurality of magnetically permeable sheets or laminations 42 which are held closely together in such a manner to form an electromagnetic flux path. These sheets are generally rectangular in plan-form, and they vary in length from an inner sheet 42a to an outer sheet 42b, as shown in Figure 2. Each sheet is U-shaped in cross section with outer, spaced-apart and parallel flange portions 44 connected by a central web portion 46. Also, each sheet 42 is preferably coated with a thin insulating layer of insulating material, such as magnesium oxide, having a thickness of around 0.001 inch. For each core, the web portions of the U-shaped sheets are held together to form a constricted center section, and progressively larger sheets are stacked so that the webs 46 are parallel to each other, the opposite flange portions 44 of the sheets at their ends thus being progressively spaced apart to form the poles of the core. In plan form, as shown in Fig. 4A, each core sheet 42 is cut to a narrower width to form the constricted center section 28 of the core where the web portions of the sheets are close together (Fig. 4C). As shown in Fig. 1, a plastic coil form 48 is provided at opposite ends of the narrowed center section to support the coil 22 or 30 which is wound around the laminated sheets 42.

The thickness of the permeable sheets 42 and the number of sheets in each inductor determine the amount of mutual flux that the inductor core can utilize when it is in saturation and, thus, its output voltage limit. For example, assume that a constant output voltage of one volt per coil turn is desired for a certain pickup or output inductor, and the input inductor is supplied with power of at least one volt per turn of the input coil. In order for the constricted center portion 28 of the output core 26 to enter a state of saturation, it has been found that the cross-sectional area of the constricted center portion 28 should be approximately 3.2 square inches of sheet material, such as silicon steel sheet. Thus, for a typical core construction for an output inductor, 40 sheets or laminations 42 having a thickness of .014 inches may be used to provide a magnetic coupling according to the present invention.

When necessary to provide an output inductor of more precise voltage output characteristerics, a trimming sheet 50 may be attached to the top surface of the core 26, as shown in Figure 4C. This sheet may be cut to the same width as the web portion 46 of a sheet 42 and to a desired length. It can then be bonded to the upper surface of the core by a suitable adhesive material before the coil form 48 and coil 30 are attached to the inductor 16.

In the embodiment shown in Fig. 1, both of the inductors 12 and 16 are enclosed in a suitable housing to facilitate their installation in either the ground or on a vehicle 20.

The inductor 12 is provided with a housing comprised of a top member 52 that covers the edges of the core sheets and is adapted to be flush with the floor or ground surface 18. A bottom member 54 is spaced from the plastic coil form 48 on the opposite side of the inductor. These members are connected to a pair of side members and to transverse end members 56 which bear against the opposite end flanges of the outermost core sheet to form an enclosure around the inductor core. Space within the enclosure is filled with a suitable insulating or potting material 58 such as a mixture of sand and resin to hold the inductor firmly in place and insulate it. Leads 60 to the coil for the inductor are connected through suitable connections 62 in one end wall.

The output inductor 16 is provided with a housing constructed of the same materials and in a similar manner as the input inductor housing. This housing, installed on the vehicle 20, includes a relatively thin bottom member 66 which is flush with the lower edges of the sheets and is parallel with a top member 68 on the opposite side of the inductor. These members are connected with end members 70 and side members 72 to form the housing surrounding the inductor 16 as a relatively compact package. Within the enclosure, the inductor is preferably surrounded by a layer of non-conductive, insulating plastic or potting compound 74. In a cavity 76 to one side of the central coil 30 within the housing are mounted components forming a capacitor 78. Leads to the coil and the capacitor are furnished through connections 80 in one end wall, as with the inductor 12 (Fig. 3).

The first electromagnetic inductor 12 has been shown embedded in the ground, but it will be apparent that it could be affixed to a post, embedded in a wall, suspended overhead, or located in some other place accessible to the vehicle. The core 26 for the pickup inductor 16 would then be mounted in front of or behind the vehicle, on a side thereof, or on top as necessary to permit maneuvering the vehicle so as to locate the core 26 near the electromagnetic inductor 12 when necessary to couple electric power to the vehicle.

In the embodiment described above, the vehicle must remain in a fixed position while it receives electrical power through the inductive coupling, for example, for charging a battery, and this embodiment is accordingly referred to as "static". In an alternate "dynamic" embodiment, the vehicle could also receive electric power through inductive coupling as it travels along the ground. This dynamic embodiment is similar to the static embodiment except that an inductor providing a continuous magnetic field must be installed along the vehicle's route of travel rather than only at one place as in the static embodiment.

One form of such a dynamic magnetic power inductor, as shown schematically in Figure 1B, comprises an elongated electromagnetic field means, or core 84, having at least one continuous conductor 86 extending lengthwise between the poles of the elongated input core. An alternating current flows through the conductor 86 to generate a magnetic field that is shaped by the input core 84. Here, the pickup or output core 26, installed in a vehicle that is movable along the elongated input core 84, is magnetically coupled therewith to receive the shaped magnetic field. As the vehicle moves along a route defined by the elongated input core, the core 26 continues to remain in magnetically coupled relationship with the input core and will receive power therefrom to drive the vehicle. A more detailed description of a dynamic magnetic power input inductor is described in U.S. Patent No. 4,007,817 (Bolger).

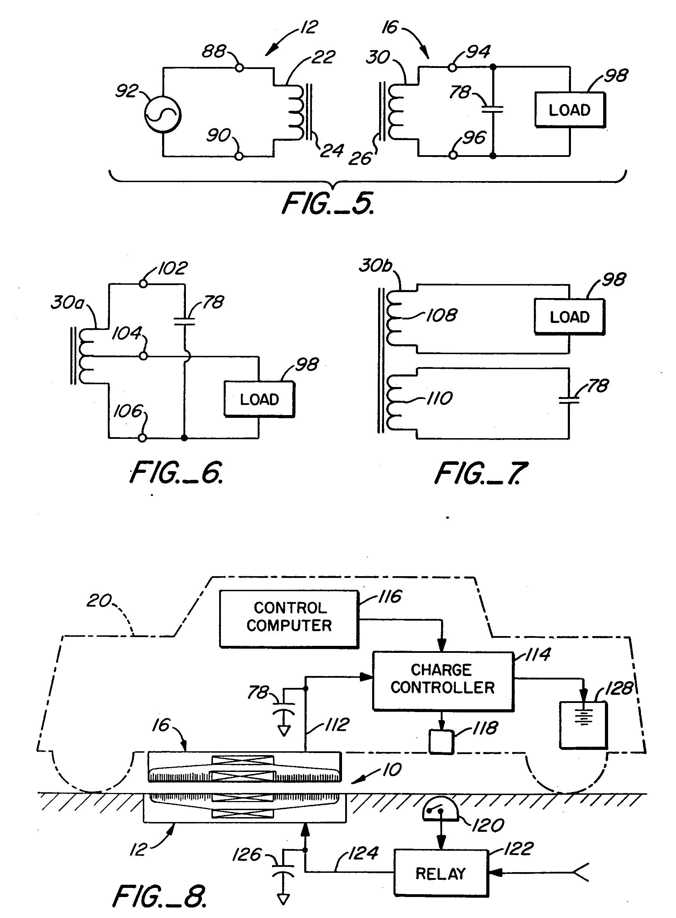

As shown schematically in Fig. 5, the input coil 22 has terminals 88 and 90 to receive electric power from a power source shown symbolically as an alternating current voltage source 92 connected to the terminals 88 and 90. The output coil 30 has terminals 94 and 96 connected to a load 98. When the inductive coupling is operating, the output core 26 is driven into saturation by the magnetic field received from the input core 24, or, if the core 26 has the constricted portion 28, then only the constricted portion 28 is driven into saturation.

The input voltage is opposed by an induced electromagnetic force in the coil 22 that is the vector sum of forces resulting from mutual and leakage flux. Since the amount of mutual flux is limited by the saturated steel in the output core 26, changes in input voltage will cause changes predominantly in the relatively large amount of leakage flux in the input inductor rather than in the amount of mutual flux. Conversely, a decrease in input voltage will cause a larger effect on leakage flux than on mutual flux. Thus, changes in input voltage will have only a small effect on mutual flux and thus on output voltage.

As shown in Fig. 5, the capacitor 78 is placed in electrical communication with the coil 30, for example, by connecting the capacitor in parallel with the inductance of the coil 30 to form a tuned circuit that is near resonance at the operating frequency. The capacitor 78 will conduct an amount of current that is relatively constant, since the voltage imposed on it does not vary widely. When current is supplied by coil 30 to the load 98, the current will have an inductive component because of the leakage reactance of the coil. This inductive component will increase with load current, and when combined with the capacitive current in the coil, the total current in the coil will more closely approach a condition of unity power factor, i.e., resonance. Thus, the voltage from the coil will tend to be maintained at a level limited by the saturation of the core steel. Were it not for the presence of the capacitor 78, a significant decrease in voltage due to inductive leakage reactance would occur with increases in load current. The relatively large leakage reactance that is characteristic of inductive power couplings is thus used to advantage in achieving a constant voltage characteristic relative to both changes in input voltage and in output current.

In an alternate embodiment, the capacitor 78 can be operated at a different voltage than the load 98 by means of a coil 30a having a plurality of taps 102 , 104, and 106, as shown in Fig. 6. Here, the capacitor 78 is connected between taps 102 and 106 for operation at a higher voltage than the load voltage in order to use a capacitor that is smaller and less costly than otherwise would be the case. Another embodiment that accomplishes a similar result uses a coil 30b that comprises a plurality of windings 108 and 110 as shown in Fig. 7. Here, the load 98 is connected to the winding 108 and the capacitor 78 is connected to the winding 110. In this embodiment, the capacitor circuit and the load circuit are electrically insulated in in situations where such and arrangement is advantageous.

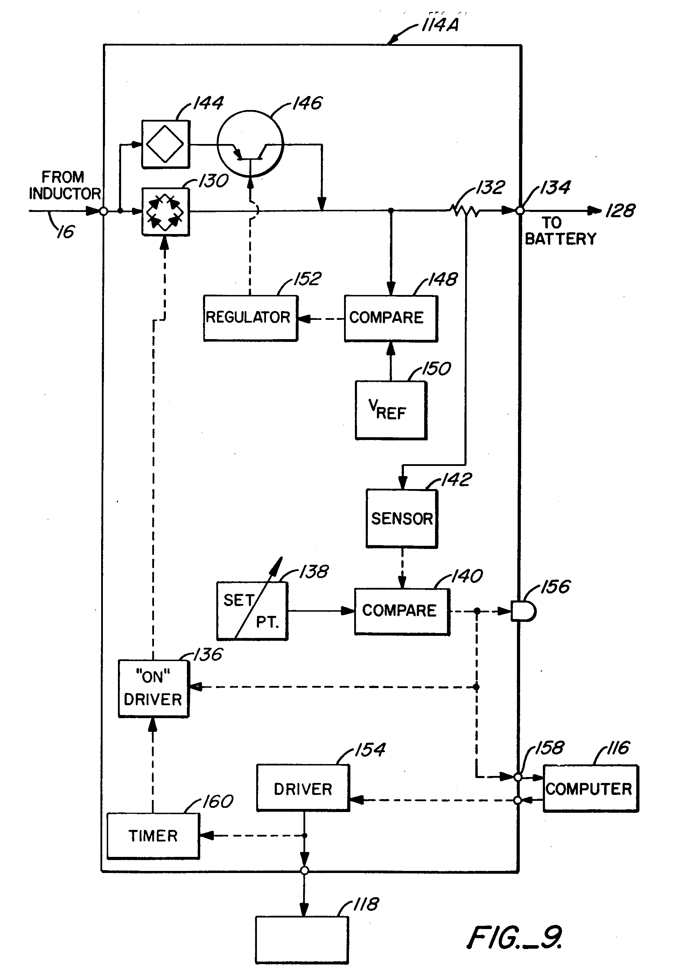

In operation, the constant voltage inductive coupling 10 according to the present invention can be particularly useful as a power source for a battery charger for electric vehicles, as shown in Figure 8. As shown, the inductor 16 has an A.C. output which is connected in parallel with the capacitor 78 and through a lead 112 to a charge controller 114. This controller is connected to a vehicle computer 116 which provides on/off input signals that control activations of the charging circuit. The controller also functions to control power supplied via output signals to a magnetic switch control 118. The magnetic switch control 118 is associated with a magnetic reed switch 120 that controls a relay 122 in a line 124 from a power source to the inductor 12. A capacitor 126 in the power line 124 is connected thereto to provide a power factor correction to input power. The controller also produces a constant D.C. output to a battery 128 for the vehicle. A more detailed description of the controller is provided below in conjunction with Fig. 9.

The most common battery used in vehicles is the lead acid battery. Such batteries can be charged in the shortest time without damage or overheating when the charging voltage is maintained just below that which will cause the electrolyte to break down and evolve hydrogen and oxygen, ie to "gas." In the case of conventional lead acid batteries this voltage is about 2.37 volts per cell; in the case of "maintenance free" batteries with lead-calcium alloy plates, the voltage is slightly higher. The current that a particular battery will accept at optimum charging voltage depends on its state of charge, its temperature, and the condition of its plates.

Thus for electric vehicles wherein the time available for battery charging is either limited or causes the vehicle to be unavailable for service, a constant voltage charger is advantageous in that it shortens the time that is required to recharge the battery.

The output voltage from the constant voltage coupling 10 remains relatively constant within the rated current of the coupling, with the exception of a slight rise at low current. The rated power of the coupling is typically determined by the cross section and number of turns in its coils 22 and 30 and the surface area that is available to dissipate the resistive losses in the coils. The range of current over which the voltage will be held relatively constant depends on the voltage drop through the resistance of the output coil and the amount of capacitive current that is available to offset the effects of leakage reactance.

When used as a source of power for battery charging, a full wave rectifier is used to convert the coupled AC voltage to DC. It has been found that at low output current the waveform of the rectified voltage changes in such a way that the time averaged value of the voltage increases. It is desirable in the operating cycles of some electric vehicles to lower the charging voltage when the battery nears a state of full charge so that the vehicle can continue to be charged over a long period of time at low rate without damage. This can be accomplished by interposing a regulating transistor between the charger's normal output terminal and the battery to decrease the charging voltage to a "trickle" charge level. The power dissipated in the transistor is low because the current is low.

Figure 9 shows a block diagram of a charge controller 114a that provides for trickle charging a battery 128. The constant voltage coupling 10 provides input power to the charge controller, in which a full wave rectifier 130 rectifies the AC input from coupling 10. The DC output from rectifier 130 passes through a shunt resistor 132 to an output terminal 134. The rectifier 130 is comprised of two diodes and two silicon controlled rectifiers so that the current through the rectifier may be turned on and off as desired by signals from a driver 136.

The output of the controller 114a is connected to the battery 128. When the current from the charger has caused the battery to become nearly fully charged, its voltage will tend to rise accordingly, and current from the charger will be reduced in accordance with the characteristic curve of the inductive coupling 10. When the current has dropped to a desired level as determined by a setting using a trim-potentiometer 138 connected to a current comparator 140, the latter receives an input from a current sensor 142 connected to the shunt resistor 132. The signal generated by the current comparator 140 causes the rectifier driver 136 to turn off the rectifier 130 when the output current has dropped to the level set by the trim-potentiometer 138.

When the rectifier 130 is turned off, its input voltage will be higher than its output voltage which is also battery voltage. This voltage drop will thus appear across a low current rectifier 144 and a pass transistor 146, which are in parallel with the rectifier 130. A voltage comparator 148 connected to the output of the pass transistor, senses the difference between the battery voltage and a reference voltage from a pre-set reference means 150, such as a zener diode. This difference is representative of a desired current for trickle charging. The error signal from the comparator 148 is provided to a regulator 152 that transforms that signal to a current output which is connected to drive the base of the pass transistor 146. The drive current is sufficient to cause the transistor 146 to pass enough charging current to the battery to cause its voltage to rise to the desired trickle voltage.

Auxiliary functions of the controller include the capability of responding to a command from a vehicle's control electronics to turn the charger on or off. This is accomplished by using an electromagnet drive transistor 154 to turn on an electromagnet switch control 118, also shown in Figure 8, which in turn activates a magnetic switch 120 to turn on the input inductor 12. An indicator 156 is activated by the signal from the current comparator 140 whenever the charging current is above a particular level, and an electronic signal is also provided from a terminal 158 to the vehicle computer under this condition.

A timer 160 is provided in the control 114a that ensures that rectifier 130 will stay on for a selected minimum time after the charger is turned on in order to ensure that even a battery at a high state of charge will receive a short period of charging at other than a trickle rate.

Alternatively the rise in voltage at low current can be used to advantage when the charging cycle is to be terminated when the battery is fully charged. The rise in voltage above the gassing limit will cause the battery to gas for a short time until the battery is fully charged. This process tends to stir the electrolyte in the cells of the battery, reducing the stratification that results from variation in the acid concentration in the electrolyte. The process has been found to be desirable with respect to battery performance and life when it is not excessively used, and tends to even or equalize the state of charge among the cells of the battery.

As set forth above, it is seen that the constant voltage inductive power coupling 10 according to the present invention provides a continuously regulated output voltage with a minimum number of compopanents, thereby providing a significant advance over prior power couplings that regulate the output voltage in discrete steps, or that require active mechanisms or electronic circuits to achieve similar results.

Various modification and changes may be made with regard to the foregoing detailed description without departing from the invention. It is therefore to be understood that, within the scope of the appended claims, the invention may be practiced otherwise than as specifically described.

## Claims

1. A constant voltage inductive power coupling for magnetically transferring electrical power from a power source (92) through an imprecise and relatively large air gap (14) to a load (98), the coupling comprising: a first electromagnetic inductor means (12), responsive to the power source (92) to generate a shaped magnetic field; a second inductor means (16) with a core (26) having a relatively dense constricted portion (28) of magnetically permeable material (42), the core (26) being in a spaced-apart and imprecise relationship to said first electromagnetic inductor means (12) to define an air gap (14) there between and magnetically coupled thereto to receive the shaped magnetic field, said constricted portion (28) being responsive to the field to enter a state of magnetic saturation; and a coil (30), electromagnetically coupled to said core (26) of said second inductor means (16) whereby the magnetic flux in the core (26) induces voltage in the coil (30) at a voltage determined by the amount of flux in the core (26) for application to the load (98), the core (26) being responsive to any change in input voltage to produce an inductive component of leakage flux which magnetically counteracts an associated change in said shaped magnetic field caused by said change in input voltage so as to maintain the constricted portion (28) of the core (26) in its state of saturation, thereby tending to keep the output voltage from said coil (30) constant.

2. The inductive power coupling as described in claim 1, wherein said output inductor (16) for said electromagnetic coupling comprises: a plurality of sheets (42) of magnetically permeable material and uniform thickness but of different lengths; each of said sheets (42) having a center section (28) of uniform width and integral opposite end portions of uniform but slightly greater width, and flange members (44) at the extreme end of each said end portion which is generally perpendicular to said center section (28); said plates (42) being arranged in a stack with their center sections aligned and contiguous to form a relatively dense, constricted portion of said core (26), the shortest of said plates (42) being at the bottom of said stack with the next largest plate (42) directly above so that the lower edges of said flange members (44) of the plates (42) are spaced apart outwardly in opposite directions at both ends of said inductor (16) along a common plane (66) to form opposite pole areas of said core (26); and said coil (30) being wrapped around said constricted portion (28) of said core (26).

3. A power coupling according to claim 1 and further comprising a capacitor (78) in electrical communication with the coil (30) to form therewith a tuned circuit that is near resonance at the operating frequency when the core (26) is in its saturated state, any increase in output current being associated with a closer approach of the circuit to a resonant condition and thereby tending to maintain the output voltage at a constant level.

4. The inductive power coupling as described in claims 2 and 3 including a housing (66,68,70,72) for said inductor means (16) for enclosing said core (26), said coil (30) and said capacitor means (78); potting compound (74) within said housing for filling voids around said inductor (16) within said housing; and connector means (80) attached to said housing to facilitate connection of said coil (30) within said housing to a load (98).

5. A power coupling according to claim 3, wherein the coil (30) has a plurality of taps (102,104,106) and said capacitor is connected between two of the taps.

6. A constant voltage inductive power coupling for magnetically transferring electric power from a power source (92) through an air gap (14) to a load (98), the coupling comprising: elongated electromagnetic means (82), responsive to the power source to generate a shaped magnetic field; a coupling inductor means (16) having a saturable core (26) in spaced-apart relationship to the electromagnetic means (82) to define an air gap (14) therebetween, said inductor means (16) being movable along the electromagnetic means (82) and in magnetically coupled relationship therewith to receive the shaped magnetic field, the core (26) having a relatively dense constricted portion (28) of magnetically permeable material (42) and being responsive to the field to enter a state of magnetic saturation; and a coil (30) electromagnetically coupled to the core (26) whereby the magnetic field induces voltage in the coil (30), the voltage determined by the amount of magnetic flux in the core, the core (26) being responsive to any change in input voltage to produce an inductive component of leakage flux which magnetically counteracts an associated change in said magnetic field caused by said change in input voltage so as to maintain the core (26) in its stage of saturation thereby tending to keep the output voltage constant.

7. A power coupling according to claim 6 and further comprising a capacitor (78) connected in parallel with the coil (30) to form therewith a tuned circuit that is near resonance at operating frequency when the core (26) is in its saturated state, any increase in output current being associated with a closer approach of the tuned circuit to a resonant condition and thereby tending to maintain the output voltage at a constant level.

8. A power coupling according to claim 7, wherein the coil (30) comprises a plurality of taps (102,104,106) and said capacitor is connected between two of the taps.

9. A constant voltage inductive power coupling as described in claim 1, wherein the first electromagnetic inductor means (12,82) is installed in the ground; the second inductor means (16) is installed on a movable vehicle (20) containing a battery (128) to which electrical power is transferred; and a battery charge control circuit (114) connected to said coil (30) and to said battery (128) including rectifier means (130,144) for converting the output from said second inductor means (16) to direct current.

10. The inductive power coupling and battery charging system as described in claim 9, wherein said charge control circuit (114) includes a control means (148,150,152) for automatically reducing the charging rate level to the battery (128) when the battery nears a fully charged condition.

11. The inductive power coupling and battery charging system as described in claim 9, wherein said control means comprises comparator means (148) for comparing the output from said rectifier means (130,144) with a preset current value and for generating a signal for reducing the output of said rectifier means (130,144) to a trickle charge level.

12. The inductive power coupling and battery charging system as described in claim 9, wherein said rectifier means (130,144) includes a first high current rectifier (130) for producing an output when said battery (128) is not fully charged and a low current rectifier (144) connected to a pass transistor (146) for producing an output when said first rectifier (130) is deactivated and only a trickle charge output is required for said battery (128).

## Patentansprüche

1. Induktive Energiekupplung mit konstanter Spannung zur magnetischen Übertragung elektrischer Energie von einer Energiequelle (92) über einen unscharfen und relativ großen Luftzwischenraum (14) zu einer Last (98), wobei die Kupplung umfaßt:
eine erste elektromagnetische Induktionseinrichtung (12), welche auf die Energiequelle (92) anspricht, indem sie eine geformtes magnetisches Feld erzeugt,
eine zweite Induktionseinrichtung (16) mit einem Kern (26), der einen vergleichsweise kompakten, verengten Teilbereich (28) aus magnetisch permeablem Material (42) besitzt, wobei der Kern (26) sich in einem räumlich getrennten, unscharfen Verhältnis zu der ersten elektromagnetischen Induktionseinrichtung (12) befindet, so daß ein Luftzwischenraum (14) dazwischen gebildet wird, und magnetisch mit dieser gekoppelt ist, um das geformte magnetische Feld aufzunehmen, wobei der verengte Teilbereich (28) auf das Feld anspricht, indem er in einen Zustand magnetischer Sättigung eintritt;
und eine Wicklung (30), die elektromagnetisch mit dem Kern (26) der zweiten Induktionseinrichtung (16) gekoppelt ist, sodaß der magnetische Fluß in dem Kern (26) eine Spannung in der Wicklung (30) mit einer Spannung, die durch die Größe des Flusses in dem Kern (26) festgelegt ist, zum Anlegen an die Last (98) induziert,
wobei der Kern (26) auf jede Änderung der Eingangsspannung anspricht, indem er eine induktive Komponente des Streuflusses erzeugt, welche magnetisch einer entsprechenden Änderung des geformten magnetischen Felds, die durch die Änderung der Eingangsspannung verursacht wird, entgegenwirkt, so daß der verengte Teilbereich (28) des Kerns (26) in seinem Zustand der Sättigung gehalten wird, und aufgrunddessen dazu neigt, die Ausgangsspannung an der Wicklung (30) konstant zu halten.

2. Induktive Energiekupplung, wie in Anspruch 1 beschrieben, wobei der Ausgangsinduktor (16) für die elektromagnetische Kupplung umfaßt:
eine Vielzahl von Blechen (42) aus magnetisch permeablem Material mit einheitlicher Dicke, aber mit verschiedenen Längen, wobei jedes der Bleche (42) einen Zentralbereich (28) mit einheitlicher Breite besitzt sowie einstückig ausgebildete gegenüberliegende Endbereiche mit einheitlicher, aber etwas größerer Breite und Flanschteile (44) am äußersten Ende jedes Endbereichs, welcher im allgemeinen senkrecht zu dem Zentralbereich (28) steht,
wobei die Platten (42) als Stapel angeordnet sind, wobei die Zentralbereiche ausgerichtet sind und aneinander anliegen, so daß ein relativ kompakter verengter Teilbereich des Kerns (26) gebildet wird, wobei die kürzeste der Platten (42) sich am unteren Ende des Stapels befindet und die nächst größere Platte (42) direkt darüber, so daß die unteren Kanten der Flanschteile (44) der Platten (42) in entgegengesetzte Richtungen an beiden Enden des Induktors (16) längs einer gemeinsamen Ebene (66) nach außen hin voneinander abgesetzt sind, so daß gegenüberliegende Polbereiche des Kerns (26) gebildet werden,
und wobei die Wicklung (30) um den verengten Teilbereich (28) des Kerns (26) gewickelt ist.

3. Energiekupplung nach Anspruch 1, welche weiterhin einen Kondensator (78) in elektrischer Verbindung mit der Wicklung (30) aufweist, um damit einen abgestimmten Kreis zu bilden, der sich bei der Betriebsfrequenz nahe der Resonanz befindet, wenn der Kern (26) im Sättigungszustand ist, wobei jedes Anwachsen des Ausgangsstroms mit einer stärkeren Annäherung des Kreises an eine Resonanzbedingung verbunden ist, und dadurch dazu tendiert, die Ausgangsspannung auf einem konstanten Niveau zu halten.

4. Induktive Energiekupplung wie in den Ansprüchen 2 und 3 beschrieben, welche ein Gehäuse (66, 68, 70, 72) für die Induktionseinrichtung (16), um den Kern (26), die Wicklung (30) und die kapazitive Einrichtung (78) einzuschließen, Füllmasse (74) innerhalb des Gehäuses, um Leerräume rings um den Induktor (16) innerhalb des Gehäuses auszufüllen, und an dem Gehäuse angebrachte Verbindungseinrichtungen (80), um die Verbindung der Wicklung (30) in dem Gehäuse mit einer Last (98) zu vereinfachen, einschließt.

5. Energiekupplung nach Anspruch 3, wobei die Wicklung (30) eine Vielzahl von Abgriffstellen (102, 104, 106) aufweist, und der Kondensator zwischen zwei der Angriffstellen geschaltet ist.

6. Induktive Energiekupplung mit konstanter Spannung zur magnetischen Übertragung von elektrischer Energie von einer Energiequelle (92) über einen Luftzwischenraum (14) zu einer Last (98), wobei die Kupplung umfaßt:

eine längliche elektromagnetische Vorrichtung (82), die auf die Energiequelle anspricht, indem sie ein geformtes magnetisches Feld erzeugt,

eine koppelnde Induktionseinrichtung (16), die einen sättigbaren Kern (26) in einem räumlich getrennten Verhältnis zu der elektromagnetischen Vorrichtung (82) besitzt, so daß ein Luftzwischenraum (14) dazwischen gebildet wird, wobei die Induktionseinrichtung (16) längs der elektromagnetischen Vorrichtung (82) beweglich ist und sich in einer magnetischen Kopplung mit dieser befindet, sodaß das geformte magnetische Feld aufgenommen wird, wobei der Kern (26) einen relativ kompakten verengten Teilbereich (28) aus magnetisch permeablem Material (42) besitzt und auf das Feld anspricht, indem er in einen Zustand magnetischer Sättigung eintritt,

und eine Wicklung (30), die mit dem Kern (26) elektromagnetisch gekoppelt ist, wodurch das magnetische Feld eine Spannung in der Wicklung (30) erzeugt, wobei die Spannung durch die Größe des magnetischen Flusses in dem Kern bestimmt wird und der Kern (26) auf jede Änderung der Eingangsspannung anspricht, indem er eine induktive Komponente des Streuflusses erzeugt, welche magnetisch einer entsprechenden Änderung des magnetischen Feldes, die durch die Änderung der Eingangsspannung verursacht wird, entgegenwirkt, so daß der Kern (26) in seinem Stadium der Sättigung gehalten wird und somit die Tendenz hat, die Ausgangsspannung konstant zu halten.

7. Energiekupplung nach Anspruch 6, welche weiterhin einen Kondensator (78) in Parallelschaltung mit der Wicklung (30) enthält, so daß mit dieser ein abgestimmter Kreis gebildet wird, der sich bei der Betriebsfrequenz nahe der Resonanz befindet, wenn der Kern (26) sich in seinem Sättigungszustand befindet, wobei jedes Anwachsen des Ausgangsstroms mit einer stärkeren Annäherung des abgestimmten Kreises an eine Resonanzbedingung verbunden ist und dadurch dazu tendiert, die Ausgangsspannung auf einem konstanten Niveau zu halten.

8. Energiekupplung nach Anspruch 7, wobei die Wicklung (30) eine Vielzahl von Abgriffstellen (102, 104, 106) umfaßt, und der Kondensator zwischen zwei der Abgriffstellen geschaltet ist.

9. Induktive Energiekupplung mit konstanter Spannung, wie in Anspruch 1 beschrieben, wobei die erste elektromagnetische Induktionseinrichtung (12, 82) im Boden installiert ist, die zweite Induktionseinrichtung (16) auf einem beweglichen Fahrzeug (20) installiert ist, welches eine Batterie (128) enthält, zu welcher elektrische Energie übertragen wird, und ein Batterieladekontrollkreis (114) mit der Wicklung (30) und mit der Batterie (128) verbunden ist, welcher gleichrichtende Mittel (130, 144) für die Umwandlung des Ausgangsstroms der zweiten Induktionseinrichtung (16) in Gleichstrom enthält.

10. Induktive Energiekupplung und Batterieladesystem, wie in Anspruch 9 beschrieben, wobei der Ladekontrollkreis (114) Steuereinrichtungen (148, 150, 152) enthält, um automatisch die Größe der Stronaufnahme der Batterie (128) zu reduzieren, wenn die Batterie sich einem vollständig geladenen Zustand annähert.

11. Induktive Energiekupplung und Batterieladesystem wie in Anspruch 9 beschrieben, wobei die Steuereinrichtungen Vergleichsmittel (148) zum Vergleichen des Ausgangsstroms von den gleichrichtenden Mitteln (130, 144) mit einem voreingestellten Wert für den Strom und zur Erzeugung eines Signals zur Reduzierung des Ausgangsstroms von den gleichrichtenden Mitteln (130, 144) auf ein Erhaltungsladeniveau umfassen.

12. Induktive Energiekupplung und Batterieladesystem, wie in Anspruch 9 beschrieben, wobei die gleichrichtenden Mittel (130, 144) einen ersten Hochstrom-Gleichrichter (130) enthalten, um einen Ausgangsstrom zu liefern, wenn die Batterie (128) nicht vollständig geladen ist, sowie einen Niederstrom-Gleichrichter (144), der mit einem Durchlaßtransistor (146) verbunden ist, um einen Ausgangsstrom zu erzeugen, wenn der erste Gleichrichter (130) inaktiviert ist und nur ein Erhaltungsladugs-Ausgangsstrom für die Batterie (128) benötigt wird.

## Revendications

1. Un couplage d'énergie inductif à tension constante pour transférer magnétiquement de l'énergie électrique d'une source d'énergie (92), à travers un interstice d'air imprécis et relativement grand (14), à une charge (98), le couplage comprenant : un premier moyen inducteur électromagnétique (12), sensible à la source d'énergie (92) pour générer un champ magnétique mis en forme ; un second moyen inducteur (16) avec un noyau (26) ayant une partie resserrée (28) relativement dense de matériau magnétiquement perméable (42), le noyau (26) étant en relation distante et imprécise avec ledit premier moyen inducteur électromagnétique (12) pour définir un interstice d'air (14) entre eux et couplé magnétiquement avec celui-ci pour recevoir le champ magnétique mis en forme, ladite partie resserrée (28) étant sensible au champ pour entrer dans un état de saturation magnétique ; et une bobine (30), couplée électromagnétiquement audit noyau (26) dudit second moyen inducteur (16), afin que le flux magnétique dans le noyau (26) induise une tension dans la bobine (30) à une tension déterminée par la quantité de flux dans le noyau (26) pour application à la charge (98), le noyau (26) étant sensible à tout changement en tension d'entrée pour produire une composante inductive de flux de fuite qui contrebalance magnétiquement un changement associé dudit champ magnétique mis en force entraîné par ledit changement en tension d'entrée afin de maintenir la partie resserrée (28) du noyau (26) dans son état de saturation, afin de tendre à maintenir constante la tension de sortie de ladite bobine (30).

2. Le couplage d'énergie tel que décrit dans la revendication 1, dans lequel ledit inducteur de sortie (16) pour ledit couplage électromagnétique comprend : une pluralité de feuilles (42) en matériau magnétiquement perméable et d'épaisseur uniforme mais de longueurs différentes ; chacune desdites feuilles (42) ayant une partie centrale (28) de largeur uniforme et des parties d'extrémité opposée monoblocs de largeur uniforme mais légèrement plus grande, et des éléments de flanc (44) à l'extrémité de chaque dite partie d'extrémité qui est généralement perpendiculaire à ladite partie centrale (28) ; lesdites feuilles (42) étant disposées en une pile avec leurs parties centrales alignées et contigües pour former une partie resserrée, relativement dense dudit noyau (24), la plus courte desdites feuilles étant au-dessous de ladite pile avec la feuille suivante plus grande (42) directement au-dessus afin que les bords inférieurs desdits éléments de flanc (44) des feuilles (42) soient espacés vers l'extérieur suivant des directions opposées à deux extrémités dudit inducteur (16) le long d'un plan commun (66) pour former des zones de pôle opposées dudit noyau (26) ; et ladite bobine (30) étant enroulée autour de ladite partie resserrée (28) dudit noyau (26).

3. Un couplage d'énergie conforme à la revendication 1 et comprenant en outre un condensateur (78) en liaison électrique avec la bobine (30) pour former avec celle-ci un circuit accordé qui est proche de la résonance à la fréquence de fonctionnement lorsque le noyau (26) est à son état saturé, une quelconque augmentation du courant de sortie étant associée à une approche du circuit voisine d'un état résonnant et de manière à tendre à maintenir la tension de sortie à un niveau constant.

4. Le couplage de puissance inductif tel que décrit dans les revendications 2 et 3 incluant un boîtier (66, 68, 70, 72) pour ledit moyen inducteur (16) pour enfermer ledit noyau (26), ladite bobine (30) et ledit moyen de condensateur (78) ; un composé d'enrobage (74) dans ledit boîtier pour remplir des espaces vides autour dudit inducteur (16) dans ledit boîtier ; et un moyen de connecteur (80) fixé audit boîtier pour faciliter la connexion de ladite bobine (30) dans ledit boîtier à une charge (98).

5. Un couplage d'énergie conforme à la revendication 3, dans lequel la bobine (30) a une pluralité de branchements (102, 104, 106) et ledit condensateur est connecté entre deux des branchements.

6. Un couplage d'énergie inductif à tension constante pour transférer de l'énergie électrique magnétiquement d'une source d'énergie (92) à travers un interstice d'air (14) à une charge (98), le couplage comprenant : un moyen électromagnétique allongé (82), sensible à la source d'énergie pour générer un champ magnétique mis en forme ; un moyen inducteur de couplage (16) ayant un noyau saturable (26) en relation distante avec le moyen électromagnétique (82) pour définir un interstice d'air (14) entre eux, ledit moyen inducteur (16) étant mobile le long du moyen électromagnétique (82) et en relation couplée magnétiquement avec celui-ci pour recevoir le champ magnétique mis en forme, le noyau (26) ayant une partie resserrée relativement dense (28) en matériau perméable magnétiquement (42) et étant sensible au champ pour entrer dans un état de saturation magnétique ; et une bobine (30) couplée électromagnétiquent au noyau (26) afin que le champ magnétique induise une tension dans la bobine (30), la tension étant déterminée par la quantité de flux magnétique dans le noyau, le noyau (26) étant sensible à tout changement en tension d'entrée pour produire une composante inductive de flux de fuite qui contrebalance magnétiquement un changement associé dans ledit champ magnétique causé par ledit changement en tension d'entrée afin de maintenir le noyau (26) dans son état de saturation, de manière à tendre à maintenir constante la tension de sortie.

**7.** Un couplage d'énergie conforme à la revendication 6, et comprenant en outre un condensateur (78) connecté en parallèle avec la bobine (30) pour former avec celle-ci un circuit accordé qui est proche de la résonance à la fréquence de fonctionnement lorsque le noyau (26) est dans son état saturé, toute augmentation en courant d'entrée étant associée avec une approche du circuit accordé voisine d'un état résonnant, et de manière à tendre à maintenir la tension de sortie à un niveau constant.

**8.** Un couplage d'énergie conforme à la revendication 7, dans lequel la bobine (30) comprend une pluralité de branchements (102, 104, 106) et ledit condensateur est connecté entre deux des branchements.

**9.** Un couplage d'énergie inductif à tension constante tel que décrit dans la revendication 1, dans lequel le premier moyen inducteur électromagnétique (12, 82) est installé dans le sol, le second moyen inducteur (16) est installé sur un véhicule mobile (20) contenant une batterie (128) à laquelle de l'énergie électrique est transférée ; et un circuit de commande de charge de batterie (114) connecté à ladite bobine (30) et à ladite batterie (128) incluant un moyen redresseur (130, 144) pour convertir la sortie dudit second moyen inducteur (16) en courant continu.

**10.** Les couplage d'énergie inductif et système de charge de batterie tels que décrits dans la revendication 9, dans lesquels le circuit de commande de charge (114) inclut un moyen de commande (148, 150, 152) pour réduire automatiquement le niveau de débit de charge de la batterie (128) lorsque la batterie approche d'un état complètement chargé.

**11.** Les couplage d'énergie inductif et système de charge de batterie tels que décrits dans la revendication 9, dans lesquels ledit moyen de commande comprend un moyen comparateur (148) pour comparer la sortie dudit moyen redresseur (130, 144) avec une valeur de courant pré-établie et pour générer un signal pour réduire la sortie dudit moyen redresseur (130, 144) à un niveau de charge à régime lent.

**12.** Les couplage d'énergie et système de chargement de batterie tels que décrits dans la revendication 9, dans lesquels ledit moyen redresseur (130, 144) inclut un premier redresseur à courant élevé (130) pour produire une sortie lorsque ladite batterie (128) n'est pas complètement chargée et un redresseur à faible courant (144) connecté à un transistor passant (146) pour produire une sortie lorsque ledit premier redresseur (130) est désactivé et une sortie de charge à régime lent est seulement nécessaire pour ladite batterie (128).

FIG._I.

FIG._IA.

FIG._IB.

EP 0 253 345 B1

EP 0 253 345 B1

56    48    30

76

78

70

42b    42    42a

80

**FIG._2.**

**FIG._3.**

46    42

50

**FIG._4A.**

**FIG._4B.**

26    28    50    42

44

**FIG._4C.**

*FIG._5.*

*FIG._6.*

*FIG._7.*

*FIG._8.*

FIG._9.